# EUROPEAN PATENT SPECIFICATION

(11) **EP 0 907 060 B1**
(45) Date of publication and mention of the grant of the patent: **19.11.2003**
(21) Application number: 98118286.8
(22) Date of filing: 28.09.1998
(51) Int. Cl.: F25D 13/00, F25D 17/06, A23L 3/36

(54) **Opposite flows equipment, particularly for the fast heat reduction in the cooked and raw food preservation cycles even in the freezing**
Gerät mit entgegengerichteten Strömungen, insbesondere für eine schnelle Wärmeabsenkung bei Bewahrunszyklen für gekochte oder rohe Lebensmittel auch beim Gefrieren
Appareil à ècoulements opposés, en particulier pour une réduction de chaleur rapide dans des cycles de conservation d'aliments cuit ou crus même en congélation

(30) Priority: 01.10.1997 IT TV970133
(43) Date of publication of application: 07.04.1999
(73) Proprietor: Frigocalor s.n.c. di Menegazzo Graziano & C., 31010 Casella d'Asolo (TV) (IT)
(72) Inventor: Menegazzo, Graziano, 31010 Casella d'Asolo (IT)
(74) Representative: D'Agostini, Giovanni, Dr.

(56) References cited:
- CH-A- 220 296
- FR-A- 2 663 410
- GB-A- 2 263 539
- GB-A- 2 280 016
- US-A- 3 990 260
- US-A- 4 981 171

## Description

The present invention has for object an opposite flows equipment particularly for a fast heat reduction, in the cooked and raw food preservation cycles even in freezing.

The invention finds particular even if not exclusive application in the sector of large plants for the food production-preservation and in public restaurant services.

### Prior art

The temperature fast reducers are known, also with the name of thermal reducers. They were created rather recently on the basis of a common experience of the operators working in the field of the public restaurant services and in general in food production, who, having to resort always more frequently to pre-cooked or frozen food, found that once the cooking was effected, the food, when not immediately eaten undergoes a fast degradation, on one side altering the food's organoleptic characteristic, but mainly being a good medium for the proliferation of bacteria.

In the sector of restaurant services, until not so long ago, there was the habit of letting the hot food cool in open air, and then, once a suitable temperature was reached, of inserting it in common refrigerating boxes, alternatively frozen. On the other hand, there was no other possibility, because it is known that inserting hot food inside of refrigerating boxes or freezers, tends to considerably increase the temperature, thus altering the correct preservation cycles of the previously inserted food. The system widely used nowadays has not at all solved the problem of bacterial proliferation, because the time interval existing between the extraction of the food, for instance from the oven, and the insertion into preserving equipment is always too long, with clear damage to the quality of the products which will be later served.

Not only, but it was also noticed that because the contamination occurred in the time interval necessary for the product's natural cooling, even if the food is subsequently conditioned in the refrigerator at temperatures close to 0°C, the contamination does not decrease, on the contrary, an increase in activity may be noticed.

On the basis of this, aimed at stopping the bacteria proliferation, it was necessary to develop an equipment which may be placed in an intermediate position, practically between the food's pre-cooking and preservation phase, also because in the meantime different regulations on the subject were given, which put certain limitations. Subsequently, some tests were carried out and it was ascertained that the main bacterial development occurs between +65°C and +10°C, therefore the cooked food had to be brought to safety temperatures close to +10°C, in the shortest time possible, thus creating the fast heat reducers.

Presently, said equipment, known as indirect cooling device, is subdivided into two large groups, the single-lateral flow group and the single-frontal flow ones. The first ones are those widely used and are essentially made up of a body with an internally insulated double wall, with a steel base provided with small feet. The internal part comprises a laterally placed reduction chamber with the relative access, also in steel, provided with walls for the conveyance of air. To the side of the conveyance chamber, the evaporator group is provided, with its relative compressor, placed inside the equipment, protected in an accessible opening. Between the evaporator and the reduction chamber a forced ventilation system is provided, with electric impellers which have the purpose of removing the heat from the food inserted, for conveying the hot air towards the evaporator, and thus crossing the same in a single direction, re-inserting a cold air flow in the reduction chamber, conveying it to reach the walls. The drawbacks found in this solution consist relate mainly to time, not short enough, to reach the safety threshold, of a low yield/productive capacity as well as of an irregular temperature decrease occurring on the surfaces of the food thus treated. Secondly, said equipment for obtaining satisfactory results, must use a great power, with the consequent plant oversizing and rather high electric power consumptions.

An alternative solution consisted in providing some equipment of the single-frontal flow type. This latter is different from the first ones, mainly because it provides the reduction chamber frontally placed, while the electric impeller is placed on the rear and then the evaporator is on the back fed by the relative compressor group, the whole of course is housed in a suitable opening. Structurally, the equipment is deeper than the previous one, and vice versa takes up less space width-wise. Regarding the functional part, it is possible to notice that it is mainly based on the previous system; the heat of the frontally inserted food is taken from the impeller and transferred to the evaporator at the back, to later start a cold air flow which is made to circulate, creating a whirling motion, in the reduction chamber contacting the walls, in this case the lateral ones. Also in this solution the drawbacks would substantially remain the ones already mentioned.

The same applicant, with patent application for industrial utility model n. TV95U000054 (Frigo Calor), meant to propose an improvement to an equipment for a fast heat reduction, particularly for the cooked food preservation, of the type comprising a body with relative base, suitably insulated, said body being able to enclose at least three areas, a first centrally located one, making up a reduction chamber, inside which the baking-pans with the food being subjected to treatment will be inserted, and two diametrically opposed ones and intercommunicating with said first one, each being made up of at least one evaporator and corresponding electric impellers, while the evaporators fed by at least one compressor group, use:
- a halved and opposed single-circuit
- alternatively, a tandem-like independent and opposite double circuit.

This latter solution, even representing a considerable progress, does not seem to be sufficiently optimised yet, with regard to a possible yield.

And in fact, in this one like in the previous ones, it can be noticed that the position and the structure of the evaporator group has substantially remained unchanged in time. In practice, it is placed at a certain distance from the chamber back, this in order that the air, frontally sucked by the electric impeller, surrounding in one direction the finned pipes may expand in the rear hollow space and continue its course, contacting the lateral walls to later be inserted again in the reduction chamber. In order to allow free passage of the air flows, from the rear hollow space to the lateral channels in respect to the evaporator, used in prior art, a surface made up of a finned piping is provided, which does not concern at all the whole chamber length but is limited to a portion of same. Thus, some lateral openings or channels are obtained, through which the air re-circulation flow is made pass.

Thus, substantially, we have a type of air flow which, in the present reducers, carries out the following cycle:
- heat removal from the treated object;
- passage going through the finned piping inside the evaporator;
- free return from the rear area to the evaporator, through the lateral openings.

From all this it may be understood that the use of said evaporators also involves high management costs, relative to their high power consumption. Furthermore, they impose a certain dimensioning with important limits in respect to the heat elimination capacity and speed, not suitably exploiting those spaces, substantially unused, which may be technically exploited for a better yield. With similar structures, thus, further increasing the evaporator yield is not possible unless dimensionally modifying at least the inside of the chamber and as a consequence, inserting a larger sized evaporator. Substantially, regarding the production and the economical aspect, the whole is negatively reflected on quality, but also on the manufacturing process, forcing the firm to a complex management of the productive unit, with a lack of flexibility in the offer system.

The scope of the present invention is also that of obviating the above mentioned drawbacks.

This and other purposes are reached with the present invention according to the characteristics as in the enclosed claims solving the illustrated problems by means of an equipment particularly for a fast heat reduction in the cooked food preservation cycles, of the opposite flows type, comprising a body with relative base, suitably insulated, said body being able to enclose at least three intercommunicating areas, a first centrally located one, making up a reduction chamber, in whose inside baking-pans with the food being subjected to treatment will be inserted, and two diametrically opposed chambers communicating with said first one by an open inter-wall, each further defined by a bottom and two opposite walls and each comprising at least one evaporator fed by at least one compressor group and a corresponding electric impeller, the evaporator using a halved and opposite single circuit or, alternatively, a tandem-like opposite independent double circuit; characterised in that each evaporator provides a refrigerating circuit comprising a first surface of finned pipes which develops transversally from one wall to another of said opposite walls of each of the opposed chambers said first surface being in contact, on the side of the interwall with at least one electric impeller and a second surface of pipes of the non-finned type whose extension is almost equal to said first one and which occupies the space left between said first surface and the bottom of each of the opposed chambers.

Thus, through the considerable creative contribution whose effect is an immediate technical progress many advantages are obtained. In the first place, a better efficiency of the machines is obtained, with a considerable yield coefficient (C.O.P.), allowing a further optimisation of the temperature reduction process or also the freezing. Furthermore, by applying to these machines some cycle inverted valves or also some batteries with electric resistances, with some relative logic units for programming and managing the different treatment cycles, it is possible to give them some multifunctional features, making them possibly usable in the leavening-stop, defrosting, leavening, pasteurisation, softening, and the like.

Regarding the specific use in the reducers category, the advantages also consist of a further reduction in the treatment times of the cooked or raw food, reaching a matchless hourly production. Furthermore, other benefits, found in the functions are attributable to the obtainment of a temperature reduction decidedly more even regarding the food thus inserted, with clear better guarantees for the elimination of the bacterial mass.

These and other advantages will appear from the following detailed description of embodiment preferred solutions with the aid of the enclosed schematic drawings whose execution details should not be considered as limitative but only illustrative.

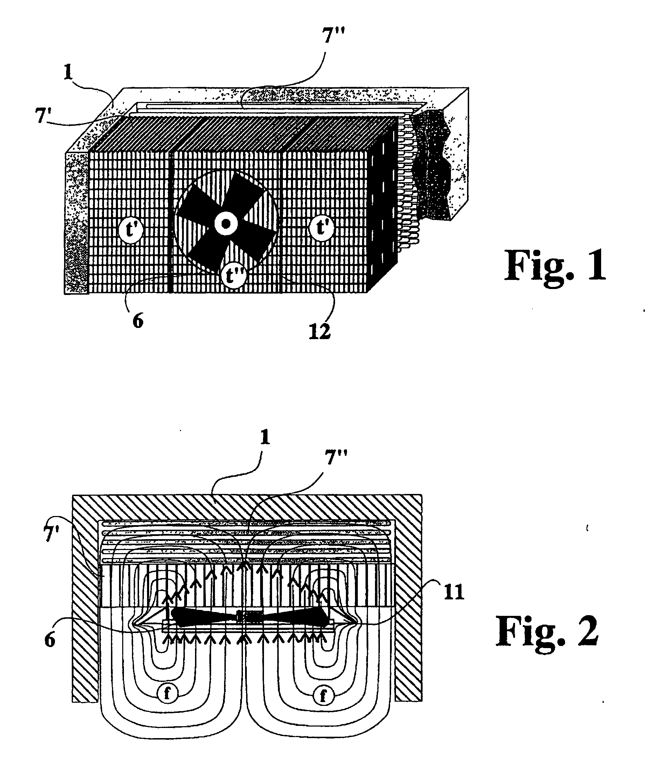

Figure 1., shows a perspective view of an evaporator group, concerning an equipment, particularly for the fast heat reduction.
Figure 2., shows a partial plan view, of the same equipment with an evaporator group as in the previous Figure, with the schematization of the re-circulation flows.
Figure 3., shows a plan view of an equipment particularly for the fast heat reduction, in which the forced and opposite flows of the air circulating inside of the reduction chamber are pointed out.
Figure 4., shows again a plan view, of the same equipment as in the previous Figure, without the schematization of said forced flows.
Finally, Figure 5., schematically shows a line of fast temperature reducers, placed one close to the other to form a cooling tunnel.

### Description of a possible embodiment.

Also referring to the figures, it may be noticed that an improved equipment (A), particularly aiming at the ultra fast reduction of the cooked and raw food temperature, is essentially made up of a body (1), preferably in stainless steel, internally insulated and provided on the underlying part with a base, preferably also in stainless steel.

Said body (1), perimetrically defines the equipment (A), consisting of a shape, for example parallelepiped like and not excessively developed in width, essentially subdivided in three areas, a first central one (b) and two diametrically opposed ones (c, c'), that is respectively obtained to the side of said first one (b). The central area (b) makes up the reduction chamber and is provided with a small door (2), hinged on the side, for the frontal access inside of said chamber (b), allowing the insertion of the food-holding baking pans (3) and eventually of the relative tray. In an alternative solution, always in correspondence to the reduction chamber (b), a second opening (2') may be provided, obtained on the back of the equipment. Practically, it allows the making of a modular line, consisting of a plurality of reducers (A, A', A"...) placed one after the other, substantially obtaining a tunnel for the fast and progressive reduction of the temperature.

The reduction chamber (b) may eventually be separated from the areas (c, c') by an open inter-wall (4, 4'), centrally provided with an opening (5, 5'), in this case round shaped, to which on the other side, that is inside of at least one of the areas (c, c') at least one electric impeller (6, 6') corresponds. Said electric impeller (6, 6'), is associated to an evaporator (7, 8) which, fed by at least one compressor group and relative electric and electronic components, may be with halved and opposite single-circuit or alternatively with tandem-like opposite independent double circuit, for a better cooling safety.

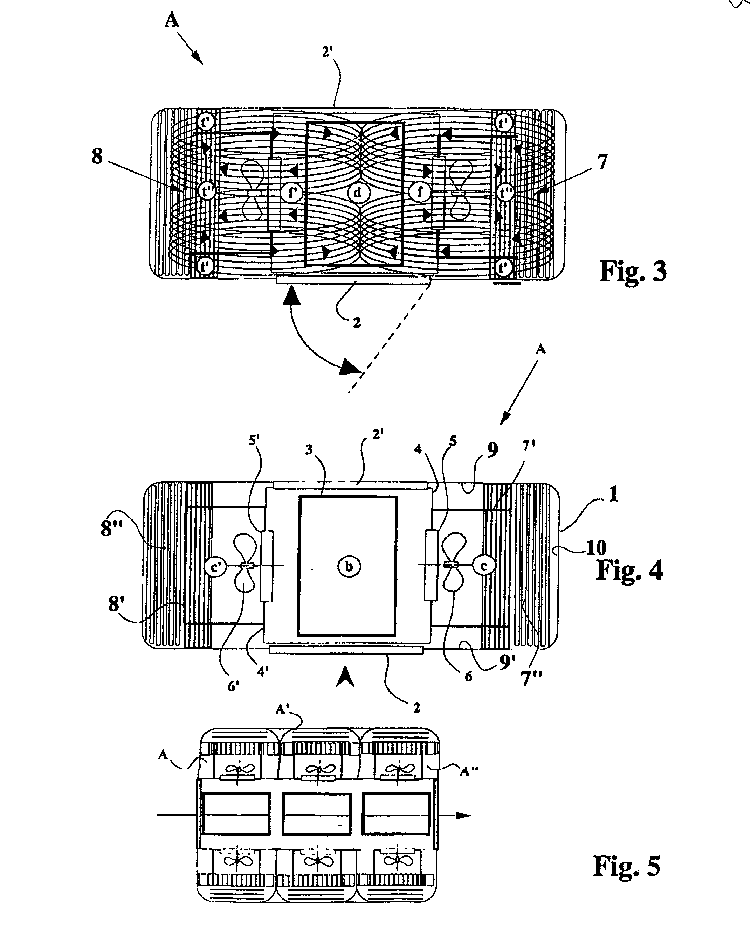

As schematically pointed out in Figure 3., dividing the necessary power on two exchangers (7, 8), one in front of the other, and ventilating both of them, and modulating their intensity, by means of ventilators (6, 6') having identical size and capacity, on the food (3) placed at the centre of the chamber (b) a whirling double flow (f, f) is created. Said flow allows to take off the heat from the food placed in the baking-pans (3), to then convey it at least towards the openings (5, 5'), thus, at first making it strongly cross the evaporator (7, 8), and then distributing it again in the reduction chamber (b). Such movement (f, f) creates a hollow (d) inside of the same chamber (b), considerably easing the temperature reduction.

In this case, in order to optimise the yielding, the evaporators (7, 8) are of the complex type, because they are made up of a refrigerating circuit, essentially subdivided in two parts, respectively a first one (7', 8') comprising a finned piping which extends from the wall (9) to the opposite wall (9') of the areas (c, c'), and a second one (7", 8"), occupying the space left between said first piping (7', 8') and the bottom (10), made up a non-finned piping.

Concerning the finned piping (7', 8'), each is subdivided into three areas, separated respectively two end ones (t') close to the side of the relative chambers (c, c') and an intermediate one (t"). The separation between said three areas (t', t") is obtained by means of some partitions (12), respectively two for each of the finned piping (7', 8'), the partitions concerning the finned piping in depth. A characteristic of the two end areas (t') is that of presenting more spaced fins, that is with a different pitch, therefore a wider one, in respect to those present in the central portion (t"), consequently easing a circulation speed near the opening sides (c, c') higher than in the central part.

The unfinned piping (7", 8") of the refrigerating circuit, placed at the back in respect to the finned piping (7', 8'), has the same extension of this latter, also being protracted from the wall (9) to the wall (9') of the areas (c, c'). With the purpose of increasing the air flow re-circulation speed (f, f), perimetrically to the electric impellers (6, 6'), a deflector (11) may be provided, which substantially deviates and tightens the lateral downflow areas. As consequence, the air optimal flow obtained carries out the following cycle:
- heat removal from the treated object (3);
- going passage through the first finned piping (7', 8'), inside the evaporator (7, 8);
- passage through the unfinned piping (7", 8"), provided internally of the first one (7', 8'), in a usually empty area (c, c');
- return into the reduction chamber (b), crossing the most external pipings wall, which is at first unfinned (7", 8") and later finned (t').

Again in a preferred solution, the equipment (A), may be pre-arranged to offer a series of alternative functions or in reciprocal opposition with the fast temperature reduction process. In particular, it is possible associating with it some cycle inversion valves or alternatively some batteries with electrical resistances, allowing one or more functions aiming at the heat production. Thus, the access to some treatment cycles which may concern the leavening-stop, defrosting, leavening, and softening and pasteurisation is possible.

## Claims

1. Equipment, particularly for a fast heat reduction in the cooked food preservation cycles, of the opposite flows type, comprising a body with relative base (1), suitably insulated, said body being able to enclose at least three intercommunicating areas, a first centrally located one, making up a reduction chamber (b), in whose inside baking-pans (3) with the food being subjected to treatment will be inserted, and two diametrically opposed chambers (c, c') communicating with said first one (b) by an open inter-wall (4,4'), each further defined by a bottom (10) and two opposite walls (9, 9') and each comprising at least one evaporator (7,8) fed by at least one compressor group and a corresponding electric impeller (6,6'), the evaporator using a halved and opposite single circuit or, alternatively, a tandem-like opposite independent double circuit;
**characterised in that** each evaporator (7,8) provides a refrigerating circuit comprising a first surface of finned pipes (7',8') which develops transversally from one wall to another of said opposite walls (9,9') of each of the opposed chambers (c,c'), said first surface being in contact, on the side of the interwall (4, 4') with at least one electric impeller (6,6') and a second surface of pipes (7",8") of the non-finned type whose extension is almost equal to said first one (7',8') and which occupies the space left between said first surface (7', 8') and the bottom (10) of each of the opposed chambers (c, c').

2. Equipment, according to claim 1., **characterised in that** each finned pipe (7', 8'), is subdivided into three separated areas, respectively two end ones (t') near to the sides of the opposed chambers (c, c') and an intermediate one (t"); of which the end ones (t') have fins which are spaced with a wider pitch than those present in the central portion (t").

3. Equipment according to the previous claims, **characterised in that** the said two evaporators (7, 8), one in front of the other, together with the said impellers (6,6'), have alike dimensions and capacity.

4. Equipment according to the previous claims, **characterised in that** on the food (3) placed at the centre of the chamber (b) a whirling and opposite double flow (f,f) is obtained.

5. Equipment according to the previous claims, **characterised in that** perimetrically to said electric impellers (6,6'), at least one deflector (11) is provided.

6. Equipment according to the previous claims, **characterised in that** it comprises some cycle inversion valves or alternatively some batteries with electrical resistances, logically co-ordinated by a programming unit, allowing one or more functions also aiming at the heat production.

7. Equipment according to claims 2-6, **characterised in that**, the separation between said three finned piping zones (t',t") is obtained b y means of partitions (12), respectively two for each of the finned pipings (7',8'), the partitions (12) concerning the finned pipings (7', 8') in depth.

8. Equipment according to claims 2-7, **characterised in that** the opposed air flow has a circulation speed near to the sides (t') of the chambers (c,c') higher than in the central part (t").

9. Modular line, consisting of a plurality of equipments according to anyone of the previous claims, **characterized in that** in correspondence to the said reduction chamber (b), on the back of each equipment, an opening (2') is obtained to allow the equipments to be placed one close to the other, substantially obtaining a tunnel.

## Patentansprüche

1. Ausrüstung, besonders für eine schnelle Hitzereduzierung in Konservierungszyklen für gekochtes Essen, mit entgegengesetzten Flussrichtungen, mit einem Körper mit Basis (1), der passend isoliert ist und in der Lage ist, mindestens drei miteinander kommunizierende Bereiche zu umfassen, einen ersten in der Mitte, der eine Reduktionskammer (b) bildet, in die die Bratpfannen (3) mit dem zu behandelnden Essen eingesetzt werden, und zwei diametral entgegengesetzte Kammern (c, c'), die mit besagter erster (b) durch eine offene Zwischenwand (4,4') in Verbindung stehen, jede weiter definiert durch einen Boden (10) und zwei gegenüberliegende Wände (9, 9') und jede mit mindestens einem Verdampfer (7,8), der durch mindestens eine Kompressorgruppe und ein entsprechendes elektrisches Laufrad (6,6') gespeist wird, wobei der Verdampfer einen halbierten und gegenüberliegenden einzelnen Schaltkreis benutzt oder, alternativ, einen tandemähnlichen gegenüberliegenden unabhängigen doppelten Schaltkreis;
**gekennzeichnet dadurch, dass** jeder Verdampfer (7,8) einen Kühlkreislauf umfasst, mit einer ersten Oberfläche von Lamellenleitungen (7',8'), die sich quer von einer Wand zu einer anderen der besagten gegenüberliegenden Wände (9,9') von jeder der entgegengesetzten Kammern (c,c') entwickelt, wobei besagte erste Oberfläche, auf der Seite der Zwischenwand (4, 4'), mit mindestens einem elektrischen Laufrad (6,6') in Kontakt ist, und eine zweite Oberfläche von Leitungen (7",8"), die nicht Lamellen sind, und deren Ausdehnung fast gleich der der ersten (7',8') ist, und die den Raum zwischen besagter erster Oberfläche (7', 8') und dem Boden (10) jeder der entgegengesetzten Kammern (c, c') einnimmt.

2. Ausrüstung nach Anspruch 1., **gekennzeichnet dadurch, dass** jedes Lamellenrohr (7', 8'), in drei getrennte Bereiche unterteilt ist, und zwar zwei Endbereiche (t') in der Nähe der Seiten der gegenüberliegendenen Kammern (c, c') und einen Zwischenbereich (t"); wobei die Endbereiche (t') Stege haben, die mit einer breiteren Teilung beabstandet sind als die in dem zentralen Teilstück (t").

3. Ausrüstung nach den vorherigen Ansprüchen, **gekennzeichnet dadurch, dass** die beiden Verdampfer (7, 8), der eine vor dem anderen, zusammen mit den besagten Flügelrädern (6,6'), gleiche Ausmaße und Fassungsvermögen haben.

4. Ausrüstung nach den vorherigen Ansprüchen, **gekennzeichnet dadurch, dass** auf das Essen (3) in der Mitte der Kammer (b) eine wirbelnde und doppelte Gegenströmung (f,f') ausgeübt wird.

5. Ausrüstung nach den vorherigen Ansprüchen, **gekennzeichnet dadurch, dass** umfangsmäßig zu besagten elektrischen Flügelrädern (6,6'), mindestens eine Ablenkplatte (11) vorgesehen ist.

6. Ausrüstung nach den vorherigen Ansprüchen, **gekennzeichnet dadurch, dass** sie einige Zyklusinversionsventile oder alternativ einige Batterien mit elektrischen Widerständen umfasst, die durch eine Programmiereinheit logisch koordiniert werden, so dass eine oder mehrere Funktionen möglich sind, die auch auf die Hitzeerzeugung abzielen.

7. Ausrüstung nach Anspruch 2-6, **gekennzeichnet dadurch, dass** die Trennung zwischen den drei Lamellenrohrleitungs-Bereichen (t',t") durch Trennwände (12) erfolgt, und zwar zwei für jede der Lamellenleitungen (7',8'), wobei die Trennwände (12) die Lamellenleitungen (7', 8') in der Tiefe betreffen.

8. Ausrüstung nach Anspruch 2-7, **gekennzeichnet dadurch, dass** der entgegengesetzte Luftstrom in der Nähe der Seiten (t') der Kammern (c,c') eine höhere Umlaufgeschwindigkeit hat als in dem zentralen Teil (t").

9. Modulare Linie, bestehend aus einer Vielzahl von Ausrüstungen nach jedem der vorherigen Patentansprüche, **gekennzeichnet dadurch, dass** bei der besagten Reduktionskammer (b), auf der Rückseite von jeder Ausrüstung, eine Öffnung (2') vorhanden ist, damit die Ausrüstungen nahe beieinander plaziert werden können, so dass im wesentlichen ein Tunnel entsteht.

## Revendications

1. Équipement, particulièrement pour une réduction de chaleur rapide dans les cycles de conservation d'aliments cuisinés, du type à écoulements opposés, comprenant un corps avec base relative (1), isolé convenablement, ledit corps pouvant inclure au moins trois zones d'intercommunication, une première située centralement, constituant une chambre de réduction (b), à l'intérieur de laquelle seront insérées les casseroles (3) contenant les aliments qui seront soumis au traitement, et deux chambres diamétralement opposées (c, c') communiquant avec ladite première (b) par une paroi intermédiaire ouverte (4, 4'), les autres étant définies par une base (10) et deux parois opposées (9, 9') et chacune comprenant au moins un évaporateur (7, 8) alimenté par au moins un groupe compresseur et une roue à ailettes électrique correspondante (6, 6'), l'évaporateur utilisant un circuit individuel partagé et opposé ou, alternativement, un double circuit de type tandem indépendant et opposé;
**caractérisé en ce que** chaque évaporateur (7, 8) pourvoit un circuit réfrigérant comprenant une première surface de tuyaux avec des ailettes (7', 8') qui se développe transversalement d'une paroi à l'autre desdites parois opposées (9, 9') de chacune des chambres opposées (c, c'), ladite première surface étant en contact, sur le côté de la paroi intermédiaire (4, 4') avec au moins une roue à ailettes électrique (6, 6') et une deuxième surface de tuyaux (7", 8") du type sans ailettes dont l'extension est presque égale à ladite première (7', 8') et qui occupe l'espace restant entre ladite première surface (7', 8') et le bas (10) de chacune des chambres opposées (c, c').

2. Équipement, selon la revendication 1, **caractérisé en ce que** chaque tuyau avec des ailettes (7', 8') est subdivisé en trois zones séparées, respectivement les deux extrémités (t') près des côtés des chambres opposées (c, c') et une intermédiaire (t"); dont les extrémités (t') ont des ailettes qui sont espacées avec un écart plus ample que celles présentes dans la partie centrale (t").

3. Équipement selon les revendications précédentes, **caractérisé en ce que** lesdits deux évaporateurs (7, 8), l'un devant l'autre, ainsi que lesdites roues à ailettes (6, 6'), sont de dimension et capacité semblables.

4. Équipement selon les revendications précédentes, **caractérisé en ce que** sur les aliments (3) placés au centre de la chambre (b) une double circulation tournoyante et opposée (f, f') est obtenue.

5. Équipement selon les revendications précédentes, **caractérisé en ce que**, de façon périmétrique auxdites roues à ailettes électriques (6, 6'), au moins un déflecteur (11 ) est pourvu.

6. Équipement selon les revendications précédentes, **caractérisé en ce qu'**il comprend des valves d'inversion de cycle ou alternativement quelques batteries avec résistances électriques, coordonnées logiquement par une unité de programmation, permettant une ou plusieurs fonctions visant également à la production de chaleur.

7. Équipement selon les revendications 2 - 6, **caractérisé en ce que** la séparation entre lesdites trois zones de canalisation avec des ailettes (t', t'') est obtenue moyennant des segments (12), respectivement deux pour chacune des tuyauteries avec des ailettes (7', 8'), les segments (12) concernant les tuyauteries avec des ailettes (7', 8') en profondeur.

8. Équipement selon les revendications 2 - 7, **caractérisé en ce que** le débit d'air opposé a une vitesse de circulation près des côtés (t') des chambres (c, c') supérieur à celle présente dans la partie centrale (t'').

9. Ligne modulaire se composant d'une pluralité des équipements selon n'importe laquelle des revendications précédentes, **caractérisé en ce que**, en correspondance avec ladite chambre de réduction (b), sur l'arrière de chaque équipement, une ouverture (2') est obtenue pour permettre aux équipements d'être placés l'un près de l'autre, substantiellement obtenant un tunnel.
